# EUROPEAN PATENT SPECIFICATION

(11) **EP 0 909 505 B1**
(45) Date of publication and mention of the grant of the patent: **12.01.2005**
(21) Application number: 97933945.4
(22) Date of filing: 08.07.1997
(51) Int. Cl.: H04M 3/42, H04Q 3/00

(54) **METHOD FOR MANAGING TELECOMMUNICATIONS SERVICES**
VERFAHREN ZUR VERWALTUNG VON TELEKOMMUNIKATIONSDIENSTEN
PROCEDE DE SERVICE D'EXPLOITATION DE TELECOMMUNICATIONS

(30) Priority: 12.07.1996 SE 9602765
(43) Date of publication of application: 21.04.1999
(73) Proprietor: EUROPOLITAN AB, 371 80 Karlskrona (SE)
(72) Inventor: REXEKE, Jonas, S-371 37 Karlskrona (SE)
(74) Representative: Onn, Thorsten
(86) International application number: PCT/SE1997/001245
(87) International publication number: WO 1998/003005

(56) References cited:
- WO-A-95/08892
- WO-A-96/05685
- US-A- 4 611 094
- US-A- 5 206 899

## Description

### TECHNICAL FIELD

This invention relates to a method for subscribers to re-edit personal settings relating to a mail service, GSM service, voice mail service, IN service or another service being applied for of a telephone operator.

### PRIOR ART

Internet is an international network for everybody to get and give information and to communicate with other subscribers via electronic mail, i.e. e-mail The digital communication is provided by telephone operators via a network, for example the GSM network (Global System for Mobile communication)or another network.

A traditional established data connection, with for example a GSM network, involves a communication between a subscriber, connected via a modem pool in a GSM exchange, and the fixed analogue telecommunication network. This is a technique involving a long time for establishing the connection and giving connections which are unreliable. This means, with regard to the communication with Internet, that two modem digital networks are to be connected via a much older analogue telecommunication network.

According to the new technique, Internet is directly connected to digital GSM exchanges by means of a data communication server, DaCS, to gain total access to Internet. This means that the setting up is faster, the connection is more reliable and it is cheaper to surf and get mail on Internet. This system is specially developed for mobile use.

There are known systems, intended for mobile telephones, where an e-mail can be directly read on a display of a pocket telephone. A text message, or a so called SMS (Short Message Service) notification, can have information about the sender, the time for dispatch, the head, the transmission time and so on. The receiver decides whether he or she should read the e-mail immediately, which is done by connecting the mobile telephone to a computer, which gets the SMS notification from the telephone. After that he or she answers the question whether he'wants to get the mail now or later. With some Internet operators you have to establish the connection to the e-mail box yourself and look for a new mail. An e-mail can consist of a text, sound and pictures. The advantage of an e-mail is that a comprehensive mail with enclosed files can be sent. This is both economically and time saving.

WO 96/05685, WO 95/08892, US-B-5 206 8991 and US-B-4 611 0941 disclose methods for changing personal settings in telecommunications networks.

### DESCRIPTION OF THE INVENTION

The invention relates to a method for a subscriber to re-edit his settings in connection with a mail service, GSM service, voice mail service, IN (Intelligent Network) service or another service obtained by a telephone operator. Nowadays these personal settings can be made by calling the customer service or by dialling special codes, for instance **21*078... and so on, for transmitting connections and so on. Till now it has been complicated to overview, control and change such settings.

Thus, it is an object of the present invention to provide a method for a subscriber to re-edit existing personal settings in connection with a subscribed service without engaging the service station or the like of the operator, which is important, as services of the type mentioned above will be increased very much, such as for example personal blockings, transmitted connections of certain numbers at certain times, personal voice mails and so on. It is desirable that as few sheets of paper as possible should be sent between the subscribers and the subscription services.

The method according to the invention is claimed in claim 1. Advantageous embodiments are claimed in the dependent claims.

Embodiments of the invention are described below by means of schematic representations indicated in the accompanying drawings.
Figure 1 shows a diagram relating to the transmission of the mail formula and the change of the mail formula according to an embodiment of the invention.
Figure 2 shows a simplified diagram relating to the delivering of and the receipt of a changed formula according to an embodiment of the invention.

According to known technique relating to Internet subscriptions, including a mail service, for mobile telephones, the mobile telephone, for example a pocket telephone, indicates that there is an e-mail to get by means of a text notification, a so called SMS notification, on a display of the telephone. Such an SMS notification can contain information about the sender, the head and the extent of the e-mail.

In what way a text message is drafted depends on the settings of the "formula" which are made up in connection with the start of the subscription. These settings are stored in a parameter data base in a mail server which is accessible, via GSM, by connecting the mobile telephone with a portable computer, or with a computer which is connected to the fixed telecommunication network via a modem.

According to the embodiment example the GSM network, which is the preferred communication system used in connection with the invention, has a direct connection to internet via for example a DaCS (Data Communication Server), which gives the subscriber access to the Internet world wide web (WWW) in order to "surf on the net". This means that the time for establishing a connection decreases from 40 s to 15 s compared with a traditional connection via the fixed telecommunication network.

In connection with the subscription of the mail service the settings of the parameters of the mail formula are determined, i.e. if an SMS notification is to be given, how many characters are to be received on the e-mail and with the SMS notification, respectively, how the SMS notification is to be designed and so on. Data relating to this mail program are stored in a data base which is connected to a mail server.

Different types of passwords, control numbers and so on, are used so that no one might falsify an other person's e-mail address. A control field can be placed, concealed or open, in the formula.

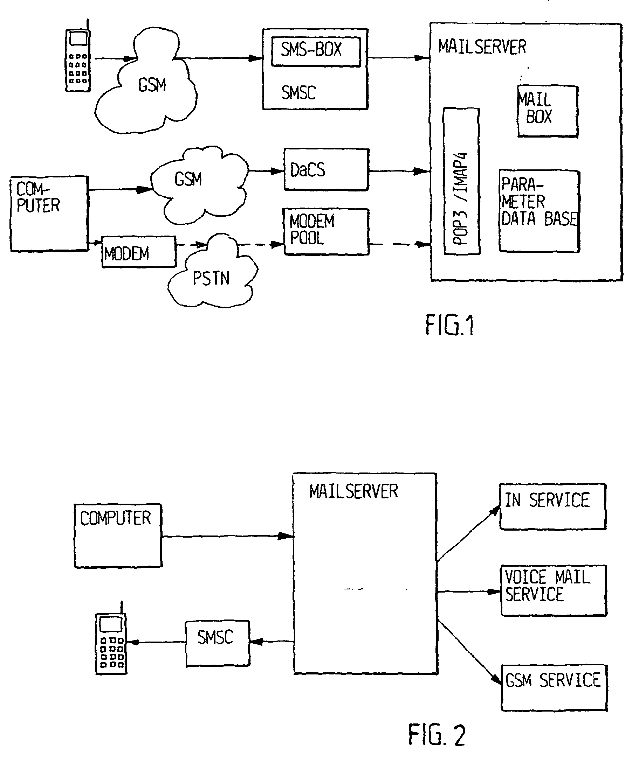

According to the invention the subscriber then can change these parameters himself in the following way. See figures 1 and 2.

The subscriber transmits, from for example a mobile telephone, an SMS with for example the text "criteria" to an SMSC (Short Message Service Centre) which is connected to a mail server. The mail server identifies the subscriber and the produced "criterion" mail ("formula") is transmitted to the subscriber computer via GSM or PSTN from the mail server. See figure 1. The reason why an SMS is used, is to guarantee that the sender is the one he says.

On the display the formula can have the following appearance, for example:

| | |
|---|---|
| 01 SMS notification | yes (yes/no/prio) |
| 02 Limit for e-mail/notification | 300 characters |
| 03 Definition of SMS notification | [subject][sender][trans.time][size] |
| 04 Transmit the mail to address | [karl.karlsson@mailbox.euromail.se] |

The subscriber now changes the transmitting connection to:

| | |
|---|---|
| 04 Transmit the mail to address | [jonas.jonasson@mailbox.euromail.se] |

In the "criterion"-mail there is an identification code to be filled in. There are also different security regulations, for example that the "criterion"-mail only might function once, during a certain time and so on.

The subscriber then returns the "criterion"-mail with the new settings to the mail server. The mail server checks that the identification corresponds and that the regulations are fulfilled. The new parameters are stored in a parameter data base. The mail server executes the ordered settings and "contacts" the corresponding network element (GSM service, voice mail service, IN service and so on). An SMS might be returned to the subscriber as a receipt of the change of the settings.

An advantage of the system is that it is client independent, i.e. it can be used in connection with all types of computers and services supplying a mail service supporting the so called standard protocol, IMAP4 or POP3 or the like. The communication is only with the mail server which in turn is connected to a parameter data base where all the parameter values for all subscribers are stored and can be accessed, changed, executed and stored. The parameter data base can have a connection with different network elements, i. e an operator's mail service, GSM service, voice mail service, IN service and so on.

Another advantage of the invention is that the personal settings for the respective service can be observed in the "formula" in plain language.

A further advantage is that the present settings can be contained in a memory and can be retrieved if so is required.

The embodiment example above describes a re-edition via a special form function via e-mail, but a re-edition can also be made via a home page on Internet.

According to this embodiment example any computer can be used which has access to internet and which can be connected to a mobile telephone of the subscriber. In this embodiment the service SMS is used as a carrier of a password for the authority control to a special home page (Web page) of the telephone operator, which home page is intended for re-editing of settings as regards the subscription of the telephone operator. The password is preferably used together with usual user identity.

In connection with the logging in to the telephone operator's special home page for re-editing the telephone number of the subscriber is indicated. A Web server generates a password which is connected to this telephone number and which password is preferably valid during a certain time, for example 5 minutes. This temporary password is sent via GSM as an SMS to the mobile telephone of the subscriber. The subscriber reads the just arrived temporary password on the display of his telephone and gives this as the password for the "GSM protected" home page and has then access to pages concerning the subscription of the subscriber. Via these pages services can now be ordered, settings can be changed, reading of the balance can be done etc., concerning the subscriber's own subscription.

In order to make the company administration easier someone can have a certificate to administrate several subscriptions via a special telephone number.

It is of no importance for the security how the connection to Internet is made in this embodiment example: The subscriber can make the logging in from any computer by Internet access as long as he has the possibility to get the temporary password via his GSM connected mobile telephone for the access to the special home page.

Each logging into the subscription pages is stored in a history data base in order to trace when a certain subscriber has gained access to said home page.

## Claims

1. A method for a subscriber to re-edit, via a computer, the personal settings concerning a mail service, a GSM service, a voice mail service, or an Intelligent Network IN service, being subscribed of a telephone operator, **characterised in that**
- a personal setting is ordered by a subscriber by transmitting an SMS from the mobile telephone of a subscriber to a server for said service,
- the personal setting with existing settings for said service is transmitted to said computer,
- the existing settings are changed by the subscriber by means of the computer,
- the changed personal setting is returned to the server and stored to function as a new personal setting,
- the server contacts the affected network element and the change is executed,
- an eventual receipt is returned.

2. A method according to the claim 1, **characterised in that** the re-editing is made via a special form function via e-mail.

3. A method according to any of the claims 1-2, **characterised in that** the re-editing relates to the setting of notification parameters for e-mail of a GSM connected mobile telephone.

4. A method according to any of the preceding claims, **characterised in that**
- the subscriber transmits an SMS via a GSM connected mobile telephone to a service centre (SMSC) connected to a mail server, which establishes the identification of the subscriber,
- a mail is made indicating the existing personal settings of the service,
- the mail is transmitted to the subscriber's computer,
- the settings are changed according to the wishes of the subscriber,
- a changed mail is returned to the mail server,
- the mail server checks the identification of the subscriber,
- the mail server stores the new settings in a memory,
- an eventual receipt is returned to the subscriber.

5. A method according to the claim 1, **characterised in that** the re-editing is made via a home page on Internet.

6. A method according to the claim 5, **characterised in that** a password, preferably valid during a certain time and connected to the telephone number of the subscriber and transmitted as an SMS from a web server to the GSM connected mobile telephone, is used to gain access to that special home page of the telephone operator where the re-editing can be made via the computer.

7. A method according to any of the preceding claims, **characterised in that** set parameters are stored in a parameter data base being in connection with said network elements.

8. A method according to any of the preceding claims, **characterised in that** one or more former settings are stored in a memory.

## Patentansprüche

1. Verfahren zum Ändern von persönlichen Daten durch einen Teilnehmer, der an einen Telefonoperator angeschlossen ist, mittels eines Computers, wobei die persönlichen Daten einen Postdienst, einen GSM-Dienst, einen Sprachdienst oder ein intelligentes Netzwerk, einen IN-Dienst betreffen, **dadurch gekennzeichnet. daß**
- eine persönliche Kennung durch den Teilnehmer durch Absenden eines SMS von seinem mobilen Telefon zu einem für diesen Dienst verfügbaren Server angefordert wird,
- die persönliche Kennung mit bereits vorhandenen Daten dieses Dienstes zu dem Computer übertragen wird,
- die bereits vorhandenen Daten durch den Teilnehmer mittels des Computers geändert werden,
- die geänderte persönliche Kennung zum Server zurückgeschickt und dort als neue persönliche Kennung gespeichert wird,
- der Server das betroffene Netzwerkelement kontaktiert und die Änderung ausgeführt wird,
- eine eventuelle Bestätigung zurückgeschickt wird.

2. Verfahren nach Anspruch 1, **dadurch gekennzeichnet, daß** die Änderung mittels einer speziellen Formularfunktion über e-mail durchgeführt wird.

3. Verfahren nach Anspruch 1 oder 2, **dadurch gekennzeichnet, daß** die Änderung sich auf das Einstellen von Mitteilungsparametern für e-mail eines an das GSM angeschlossenen mobilen Telefons bezieht.

4. Verfahren nach einem der Ansprüche 1 bis 3, **dadurch gekennzeichnet, daß**
- der Teilnehmer ein SMS mittels eines mit dem GSM verbundenen mobilen Telefons zu einem Service-Center (SMSC) sendet, das mit einem Server verbunden ist, der die Identifizierung des Teilnehmers durchführt,
- eine elektronische Nachricht erstellt wird, welche die vorhandenen persönlichen Daten des Dienstes anzeigt,
- die Nachricht zum Computer des Teilnehmers übertragen wird,
- die Daten entsprechend den Wünschen des Teilnehmers geändert werden,
- eine geänderte Nachricht zum Server zurückgeschickt wird,
- der Server die Identifizierung des Teilnehmers prüft,
- der Server die neuen Daten in einem Datenspeicher speichert,
- eine eventuelle Bestätigung zum Teilnehmer zurückgeschickt wird.

5. Verfahren nach Anspruch 1, **dadurch gekennzeichnet, daß** die Änderung über eine Homepage im Internet durchgeführt wird.

6. Verfahren nach Anspruch 5, **dadurch gekennzeichnet, daß** ein Paßwort für den Zugang zu der speziellen Homepage des Telefonoperators verwendet wird, das vorzugsweise für eine vorgegebene Zeitdauer wirksam und der Telefonnummer des Teilnehmers zugeordnet ist und als SMS von einem Netzserver zu dem mit dem GSM verbundenen mobilen Telefon übertragen wird, wodurch die Änderung mittels des Computers durchgeführt werden kann.

7. Verfahren nach einem der Ansprüche 1 bis 6, **dadurch gekennzeichnet, daß** Einstellungs-Parameter in einer Datenbank gespeichert werden, die mit den Netzwerkelementen verbunden ist.

8. Verfahren nach einem der Ansprüche 1 bis 7, **dadurch gekennzeichnet, daß** eine frühere Einstellung oder mehrere frühere Einstellungen in einem Datenspeicher gespeichert wird bzw. werden.

## Revendications

1. Procédé destiné à un abonné pour rééditer, par l'intermédiaire d'un ordinateur, les dispositions personnelles concernant un service de courrier, un service GSM, un service de messagerie vocale, ou un service de réseau intelligent (IN), souscrits auprès d'un opérateur téléphonique, **caractérisé en ce que** :
- une disposition personnelle est ordonnée par un abonné en transmettant un SMS, à partir du téléphone mobile d'un abonné, à un serveur destiné au dit service,
- la disposition personnelle est transmise, avec les dispositions existantes pour ledit service, audit ordinateur ;
- les dispositions existantes sont modifiées par l'abonné au moyen de l'ordinateur ;
- la disposition personnelle modifiée est renvoyée au serveur et stockée pour fonctionner comme une nouvelle disposition personnelle,
- le serveur contacte l'élément de réseau affecté et la modification est exécutée,
- un avis de réception éventuel est renvoyé.

2. Procédé selon la revendication 1, **caractérisé en ce que** la réédition est réalisée par l'intermédiaire d'une fonction de forme spéciale via un courriel.

3. Procédé selon l'une quelconque des revendications 1-2, **caractérisé en ce que** la réédition se rapporte à l'établissement de paramètres de notification pour un courriel d'un téléphone mobile connecté au réseau GSM.

4. Procédé selon l'une quelconque des revendications précédentes, **caractérisé en ce que** :
- l'abonné transmet un SMS, via un téléphone mobile connecté au réseau GSM, à un centre de services (SMSC) connecté à serveur de courrier, lequel établit l'identification de l'abonné,
- un courrier est écrit indiquant les dispositions personnelles existantes du service,
le courrier est transmis à l'ordinateur de l'abonné,
- les dispositions sont modifiées selon les voeux de l'abonné,
- un courrier modifié est renvoyé au serveur de courrier,
- le serveur de courrier vérifie l'identification de l'abonné,
- le serveur de courrier stocke les nouvelles dispositions dans une mémoire,
- un accusé de réception éventuel est renvoyé à l'abonné.

5. Procédé selon la revendication 1, **caractérisé en ce que** la réédition est faite par l'intermédiaire d'une page individuelle sur internet.

6. Procédé selon la revendication 5, **caractérisé en ce qu'**un mot de passe, de préférence valide pendant un certain temps et raccordé au numéro de téléphone de l'abonné et transmis sous la forme d'un SMS à partir d'un serveur de web au téléphone mobile connecté au réseau GSM, est utilisé pour donner accès à cette page individuelle spéciale de l'opérateur téléphonique où la réédition peut être faite par l'intermédiaire de l'ordinateur.

7. Procédé selon l'une quelconque des revendications précédentes, **caractérisé en ce que** les paramètres établis sont stockés dans une base de données de paramètres en connexion avec lesdits éléments de réseau.

8. Procédé selon l'une quelconque des revendications précédentes, **caractérisé en ce qu'**une disposition antérieure, ou plus, est (sont) stockée(s) dans une mémoire.
